# FASCICULE DE BREVET EUROPEEN

(11) **EP 1 152 821 B1**
(45) Date de publication et mention de la délivrance du brevet: **15.09.2004**
(21) Numéro de dépôt: 00903748.2
(22) Date de dépôt: 08.02.2000
(51) Int. Cl.: B01J 19/00

(54) **PROCEDE DE FABRICATION DE MATRICES DE LIGANDS ADRESSES SUR UN SUPPORT**
VERFAHREN ZUR HERSTELLUNG VON ADDRESSIERTEN LIGANDMATRIZEN AUF EINER OBERFLÄCHE
METHOD FOR PRODUCING ADDRESSED LIGAND MATRIXES ON A SUPPORT

(30) Priorité: 08.02.1999 FR 9901438
(43) Date de publication de la demande: 14.11.2001
(73) Titulaire: COMMISSARIAT A L'ENERGIE ATOMIQUE, 75752 Paris Cédex 15 (FR)
(72) Inventeur: LIVACHE, Thierry, F-38560 Haute Jarrie (FR); LESBRE, Frédéric, F-38120 Saint Egrève (FR)
(74) Mandataire: Audier, Philippe André
(86) Numéro de dépôt international: PCT/FR2000/000289
(87) Numéro de publication internationale: WO 2000/047317

(56) Documents cités:
- WO-A-97/49987
- WO-A-98/01221
- WO-A-98/58745
- US-A- 5 486 337
- US-A- 5 828 133
- THIERRY LIVACHE ET AL.: "Polypyrole DNA Chip on a SIlicon Device: Example of Hepatitis C Virus Genotyping" ANALYTICAL BIOCHEMISTRY., vol. 255, 1998, pages 188-194, XP002114813 ACADEMIC PRESS INC. NEW YORK., US ISSN: 0003-2697
- PATENT ABSTRACTS OF JAPAN vol. 1995, no. 11, 26 décembre 1995 (1995-12-26) -& JP 07 213926 A (HITACHI KOKI CO. LTD.), 15 août 1995 (1995-08-15) -& DATABASE WPI Section Ch, Week 199541 Derwent Publications Ltd., London, GB; Class J04, AN 1995-316145 XP002124060 & JP 07 213926 A (HITACHI KOKI K.K.), 15 août 1995 (1995-08-15)

## Description

### Domaine technique

La présente invention a pour objet un procédé de fabrication de matrices de ligands adressés sur un support.

Les ligands peuvent être des produits naturels ou synthétiques ayant une activité biologique ou une affinité pour des molécules biologiques ou autres, par exemple des peptides, des oligonucléotides, des récepteurs ou d'autres molécules d'intérêt biologique. Des matrices de ce type peuvent trouver de nombreuses applications, notamment pour la détection et l'identification de constituants dans des échantillons biologiques ainsi que pour le criblage de bibliothèques de molécules. De telles matrices peuvent être en particulier des matrices de sondes oligonucléotidiques.

### État de la technique antérieure

Depuis quelques années, on a développé plusieurs procédés de fabrications de matrices de ce type. Ainsi, on connaît trois méthodologies dans lesquelles on réalise l'adressage soit par voie photochimique, soit par voie mécanique, soit par voie électrochimique.

Dans le document Fodor S. et al, Science, 1991, 251, pages 767-773 [1], on a décrit un procédé de réalisation d'une matrice d'oligonucléotides par adressage photochimique. Selon ce procédé, on part d'un support fonctionnalisé par des groupes fonctionnels protégés par des groupes protecteurs photolabiles, on élimine ensuite ces groupes protecteurs, par irradiation à travers un masque, sur les sites qui devront être couplés aux molécules d'intérêt biologique, puis on réalise le couplage de ces molécules sur les groupes fonctionnels déprotégés.

Ce mode d'adressage photochimique présente l'inconvénient de nécessiter un grand nombre de masques différents pour réaliser l'ensemble des opérations de couplage.

Les documents : Khrapko K. R. et al, DNA Sequence -I.DNA Sequencing and Mapping, 1991, volume 1, pages 375 à 388 [2] et GB-A-2 319 838 [3] décrivent un procédé de fabrication de matrices par adressage mécanique. Dans le document [2], on utilise un support revêtu d'un gel de polyacrylamide que l'on active en substituant certains groupes amide par des groupes hydrazide. On fixe ensuite les oligonucléotides activés sous forme d'aldéhydes sur les groupes hydrazide en utilisant la technique de micropipetage de solutions d'oligonucléotides sur les sites sur lesquels ils devront être couplés.

Dans le cas du document [3], on part d'un support fonctionnalisé par des groupes réactifs que l'on couple à des molécules biologiques identiques. Ensuite, on découpe le support en plages individuelles correspondant chacune au couplage d'une molécule et on assemble ensuite sur une plaquette plusieurs plages comportant des molécules différentes aux emplacements voulus.

L'emploi de ces techniques d'adressage mécanique présente l'inconvénient de nécessiter l'apport de la molécule à fixer directement sur le site à adresser. De ce fait, les dimensions du site ne peuvent être inférieures à celles de la goutte de réactif distribuée. Par ailleurs, le processus nécessite deux phases qui sont respectivement, une phase de distribution, puis une phase d'attachement covalent. De plus le support doit être modifié de telle sorte qu'une liaison covalente puisse être créée entre le support et la molécule à fixer.

Les documents : Livache T. et al, Nucleic Acids Res., 1994, 22, 15, pages 2915-2921 [4] et WO-A-94/22889 [5] décrivent des techniques d'adressages électrochimiques pour la fabrication de matrices de produits biologiques.

Dans ce cas, on part d'un support comportant plusieurs électrodes et on utilise ces électrodes pour fixer les molécules biologiques par voie électrochimique. Dans ce but, on plonge le support muni de ses électrodes dans une solution contenant la molécule à fixer, et par activation des électrodes voulues, on les recouvre de la molécule par voie électrochimique. De ce fait, les dépôts de molécules ne peuvent être réalisés que de façon successive. Par ailleurs, il est nécessaire d'utiliser un support portant des électrodes adressables individuellement, donc des systèmes complexes éventuellement multiplexés.

La présente invention a précisément pour objet un procédé de fabrication de matrices de produits biologiques sur un support, qui pallie les inconvénients des procédés précités et qui permet de plus de réaliser l'adressage et la fixation de la molécule biologique en une seule étape, sans nécessiter une fonctionnalisation préalable du support.

### Exposé de l'invention

A cet effet, l'invention propose un procédé de fabrication d'une matrice comprenant au moins un ligand fixé par voie électrochimique sur un support conducteur ou sur des zones conductrices d'un support, dans lequel on utilise au moins un élément capable de distribuer le(s) ligand(s) couplé(s) à un monomère électropolymérisable, comme électrode pour réaliser une synthèse électriquement assistée d'un polymère porteur du (des) ligand(s) sur le support conducteur ou sur les zones conductrices du support.

Selon l'invention, on utilise donc comme électrode un élément capable de distribuer le(s) ligand(s). Cet élément peut être constitué d'un réservoir contenant le ligand couplé au monomère électropolymérisable et comportant une partie conductrice, ou simplement être formé d'une électrode en forme de fil ou d'aiguille qui, après immersion dans un récipient contenant le ligand à fixer couplé au monomère électropolymérisable, est chargée par capillarité de ce ligand.

En utilisant selon l'invention une électrode formée par un tel élément, on peut mettre en contact le ligand avec le support conducteur ou les zones conductrices du support, puis le fixer directement sur le support conducteur (ou la zone conductrice) par activation électrochimique, par exemple en créant une différence de potentiel ou en générant un courant entre le support conducteur (ou la zone conductrice) et l'élément jouant le rôle d'électrode.

Ainsi, on réalise en une seule étape la distribution et la fixation du ligand sur le support.

Selon un premier mode de réalisation de l'invention, ledit élément comprend un réservoir rempli du ligand et comportant un embout de distribution isolant, et au moins une électrode disposée dans ledit réservoir, ledit embout étant en contact direct avec le support conducteur ou au moins une zone conductrice du support, lors de l'opération de fixation.

L'embout peut être en particulier un tube capillaire que l'on pose directement sur la surface conductrice.

Selon un second mode de réalisation de l'invention, ledit élément comprend un réservoir rempli de ligand et comportant un embout de distribution conducteur, le contact entre l'embout conducteur et le support conducteur ou au moins une zone conductrice du support étant assuré par l'intermédiaire d'une goutte de ligand sortant de l'embout, lors de l'opération de fixation.

Dans ce cas, l'embout conducteur ne sera pas en contact avec le support conducteur ou la zone conductrice. Comme précédemment l'embout conducteur peut être constitué par un tube capillaire.

Selon un troisième mode de réalisation de l'invention, ledit élément est constitué par une électrode en forme de fil ou d'aiguille, chargée extérieurement de ligand couplé au monomère électropolymérisable, le contact entre l'électrode et le support conducteur ou une zone conductrice du support étant assuré, lors de l'opération de fixation, par l'intermédiaire d'une goutte de ligand retenue par l'électrode.

Dans les différents modes de réalisation décrits ci-dessus, le réservoir contient généralement une solution du ligand à fixer et du (des) réactif(s) éventuellement nécessaires pour assurer la fixation du ligand par voie électrochimique.

Selon l'invention, on assure en particulier la fixation électrochimique du ligand en le couplant à un monomère électropolymérisable. Dans ce cas, la solution peut comprendre le ligand couplé au monomère électropolymérisable, le monomère électropolymérisable et éventuellement un agent dopant.

Le monomère électropolymérisable peut être en particulier un de ceux décrits par Emr, S. et Yacynych, A. Electroanalysis, 1995, 7, pp. 913-323 [7]. Ils peuvent appartenir à deux catégories, ceux conduisant à des polymères conducteurs tels que le pyrrole, l'aniline, le thiophène ... et leurs dérivés et ceux conduisant à des polymères isolants tels que des dérivés du phénol ou du benzène.

Dans ce cas, on obtient la fixation du ligand par électrocopolymérisation du monomère et du ligand couplé au monomère.

Le ligand peut être par exemple un oligonucléotide, un nucléotide, un acide aminé ou un peptide.

Un tel procédé de fixation électrochimique est décrit dans le document [5], dans le cas où le ligand est un oligonucléotide ou un nucléotide.

Dans ce dernier cas, après avoir réalisé cette fixation, on peut allonger la chaîne de l'oligonucléotide ou du nucléotide fixé en mettant en oeuvre les procédés de synthèse classique d'oligonucléotides par couplage successif des nucléotides voulus, mais en réalisant une déprotection électrochimique du dernier nucléotide fixé.

Dans le cas des peptides, on peut utiliser la même technique pour allonger la chaîne du peptide par couplage des acides aminés voulus.

L'utilisation des électrodes décrites ci-dessus pour réaliser le dépôt et la fixation par voie électrochimique d'un ligand, présente les avantages suivants.
- La procédure de dépôt et de fixation est réalisée en seule étape et elle est très rapide.
- Cette technique est facile à mettre en oeuvre car elle utilise simplement une technique de dépôt mécanique, à titre d'exemple par déplacement à l'aide d'une micropipette, mais en la couplant aux possibilités de résolution spatiale de l'électrochimie.
- Cette technique permet de réaliser plusieurs dépôts en mode parallèle.
- Par ailleurs, ce procédé ne nécessite pas l'emploi de supports modifiés ou portant des électrodes adressables individuellement.

Dans le cas d'un support en matériau conducteur, celui-ci peut être réalisé totalement en matériau conducteur de l'électricité ou être constitué d'un matériau isolant recouvert d'une couche de matériau conducteur.

Les matériaux conducteurs utilisables peuvent être de divers types, il peut s'agir entre autres de métaux tels que l'or, l'argent et le platine, d'oxydes conducteurs tels que l'oxyde d'indium et d'étain (ITO), de carbone ou de polymères organiques conducteurs.

Dans le cas où le support comprend des zones conductrices, celles-ci peuvent être réalisées dans les matériaux conducteurs cités précédemment et disposées sur un support isolant.

Le support isolant peut être par exemple en verre, en silicium ou en matière plastique. On peut aussi utiliser un support en matériau conducteur dont les zones conductrices sont délimitées par dépôt d'un matériau isolant à la surface du matériau conducteur.

Selon l'invention, les zones conductrices peuvent être interconnectées électriquement, ou adressables électriquement, individuellement ou par groupe, pour pouvoir être activées séparément.

Le procédé de l'invention peut être mis en oeuvre de façon à fixer des ligands identiques ou différents sur des sites conducteurs différents du support.

Dans ce cas, on peut réaliser une fixation simultanée ou successive des ligands identiques ou différents en utilisant plusieurs éléments distribuant respectivement des ligands identiques ou différents. Dans ce cas, au moins deux des éléments peuvent être réunis pour former une tête d'impression.

Selon une variante de réalisation de l'invention, on réalise une fixation successive d'au moins deux ligands différents sur des sites différents du support en utilisant un seul élément mais en changeant au moins une fois le ligand distribué par cet élément.

Dans tous les modes de réalisation décrits ci-dessus, l'avantage principal réside dans le procédé de distribution-couplage du ligand, qui permet la fabrication de supports portant des molécules adressées de façon extrêmement rapide.

Le procédé selon l'invention peut être mis en oeuvre au moyen d'un dispositif de fabrication d'une matrice de ligands sur un support conducteur ou sur des zones conductrices d'un support, comprenant :
- au moins un moyen de distribution d'un ligand muni d'une partie conductrice,
- des moyens pour connecter d'une part, le support conducteur ou les zones conductrices du support et, d'autre part, la partie conductrice du moyen de distribution à un générateur électrique, et
- des moyens pour disposer et/ou déplacer le support et/ou le(s) moyen(s) de distribution, l'un par rapport à l'autre, et les mettre en contact de façon à réaliser plusieurs dépôts de ligands sur le support en des emplacements différents.

Le moyen de distribution peut comprendre un réservoir contenant le ligand et au moins une électrode disposée dans ledit réservoir et constituant la partie conductrice dudit moyen.

Selon une disposition particulière, le dispositif comprend plusieurs moyens de distribution de ligands assemblés sous forme de tête d'impression.

Selon une variante de réalisation, le dispositif de fabrication d'une matrice de ligands sur un support conducteur ou sur des zones conductrices d'un support, comprend :
- un moyen de distribution d'un ligand qui est constitué d'une électrode sous forme de fil ou d'aiguille apte à être chargée extérieurement dudit ligand,
- des moyens pour connecter d'une part, le support conducteur ou les zones conductrices du support et, d'autre part, l'électrode à un générateur électrique, et
- des moyens pour disposer et/ou déplacer le support et/ou l'électrode, l'un par rapport à l'autre, de façon à réaliser plusieurs dépôts du ligand sur le support en des emplacements différents.

D'autres caractéristiques et avantages de l'invention apparaîtront mieux à la lecture de la description qui suit, donnée bien entendu à titre illustratif et non limitatif, en référence aux dessins annexés.

### Brève description des dessins

La figure 1 représente schématiquement un élément comportant un réservoir de distribution d'un ligand et au moins une électrode pour fixer le ligand sur un support conducteur.
La figure 2 représente un élément analogue à celui de la figure 1 pour réaliser la fixation d'un ligand sur un support conducteur muni de zones conductrices interconnectées électriquement.
La figure 3 représente à une échelle agrandie l'embout du réservoir de distribution de la figure 1, pour réaliser la fixation du ligand sur un support comportant des zones conductrices multiplexées.
Les figures 4A et 4B illustrent les étapes nécessaires pour réaliser la fixation d'un ligand sur un support conducteur en utilisant une électrode sous forme de fil.
La figure 5 représente un élément de distribution, muni d'une entrée et d'une sortie de fluide pour assurer son remplissage et sa vidange, entre deux opérations de fixation de ligands différents.
La figure 6 représente schématiquement une tête d'impression comportant plusieurs réservoirs de distribution de ligands identiques ou différents.

### Exposé détaillé des modes de réalisation

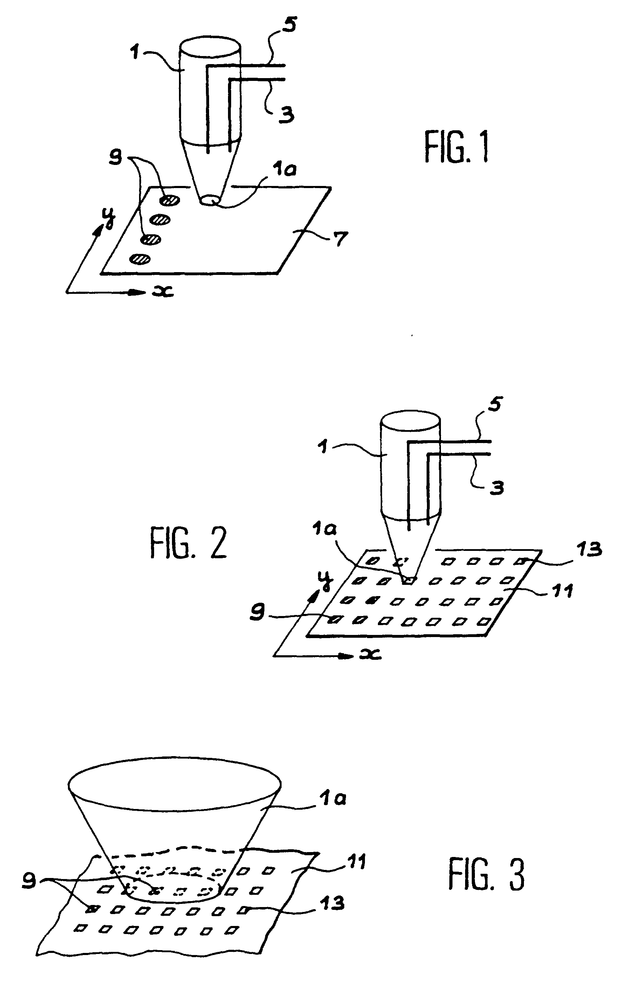

Sur la figure 1, on a représenté le premier mode de réalisation de l'invention dans lequel on utilise comme électrode un élément comprenant un réservoir 1 rempli du ligand à fixer et comportant un embout de distribution 1a. A l'intérieur du réservoir 1 sont disposées une contre-électrode 3 réalisée par exemple en platine ou en or, et une électrode de référence 5.

Le réservoir peut contenir un volume réactionnel suffisant pour assurer un certain nombre de dépôts, pouvant aller, par exemple jusqu'à un millier.

Dans ce premier mode de réalisation représenté sur la figure 1, on utilise un support conducteur 7 qui peut comporter un substrat en verre recouvert d'une couche d'or.

Sur cette figure, on a représenté les dépôts 9 effectués avec un tel réservoir en déplaçant par exemple le support selon les directions x et y entre deux dépôts. Dans le cas où l'embout 1a du réservoir, ayant par exemple la forme d'un tube capillaire, est réalisé en matériau isolant, celui-ci peut être posé sur le support conducteur 7 et par création d'une différence de potentiel ou de courant entre la surface conductrice 7 et la contre-électrode 3, on peut obtenir les dépôts 9 qui sont fixés sur la surface conductrice 7 par impulsion électrique. Dans ce cas, la dimension des dépôts 9 est fixée par les dimensions de l'interface réservoir/support située dans les lignes du champ électrique entre l'électrode et la surface conductrice. Cette interface doit être la plus petite possible pour réduire la dimension du dépôt obtenu.

Le réservoir de la figure 1 peut aussi comporter un embout 1a en matériau conducteur. Dans ce cas, on réalise la fixation du ligand présent dans le réservoir en assurant le contact entre la surface conductrice 7 et l'électrode formée par l'embout 1a par l'intermédiaire d'une goutte sortant de l'embout 1a. Dans ce cas les dimensions des dépôts seront également réglées par l'interface entre le liquide et la surface conductrice située dans des lignes du champ électrique.

On peut améliorer la résolution des dépôts 9 en utilisant, comme représenté sur la figure 2, un support formé de zones conductrices interconnectées. Sur la figure 2, on a repris les mêmes références que sur la figure 1 pour désigner le réservoir 1 muni de son embout 1a, d'une électrode de référence 5 et d'une contre-électrode 3. Dans ce cas, le support est constitué par un support isolant 11 muni de zones conductrices 13, isolées les unes des autres mais interconnectées électriquement. Ces zones conductrices peuvent être réalisées en or sur un substrat en verre ou silicium, par exemple. Dans ce cas, on obtient les dépôts 9 en distribuant au-dessus des zones conductrices le ligand, mais seules les zones conductrices en contact avec le ligand pourront être recouvertes de celui-ci. Ainsi, les dimensions des dépôts sont réglées par les dimensions des zones conductrices 13.

Dans ce cas, le support conducteur utilisé ne comporte en réalité qu'une seule électrode ; cela simplifie énormément sa fabrication et les coûts obtenus peuvent être très bas puisque de simples feuilles de matière plastique recouvertes par un matériau conducteur peuvent être utilisées.

L'utilisation d'un réseau de zones conductrices permet de réduire la taille des dépôts 9, mais pas d'augmenter la densité de la matrice. En effet, cette densité dépend directement de la dimension de l'interface entre l'embout capillaire 1a et le support et elle est limitée par les dimensions de l'embout.

On peut toutefois augmenter la densité de la matrice en utilisant un support comportant des zones conductrices formant des électrodes multiplexées, comme représenté sur la figure 3.

Sur cette figure 3, on a illustré l'embout la du réservoir 1 des figures 1 et 2 à une échelle agrandie et une partie d'un support conducteur isolant 11 muni de zones conductrices 13 qui sont reliées séparément à des moyens d'application d'un potentiel ou de courant pour être activées séparément. Dans ce cas, les dimensions des dépôts seront déterminées par les dimensions des zones conductrices 13 activées, comme il apparaît dans le cas de la figure 3. Les autres zones conductrices qui sont en contact avec le ligand ne pourront conduire à une fixation de ce dernier puisqu'elles ne sont pas électroactivées. De cette façon, on peut atteindre simultanément une haute résolution dimensionnelle et une forte densité de matriçage.

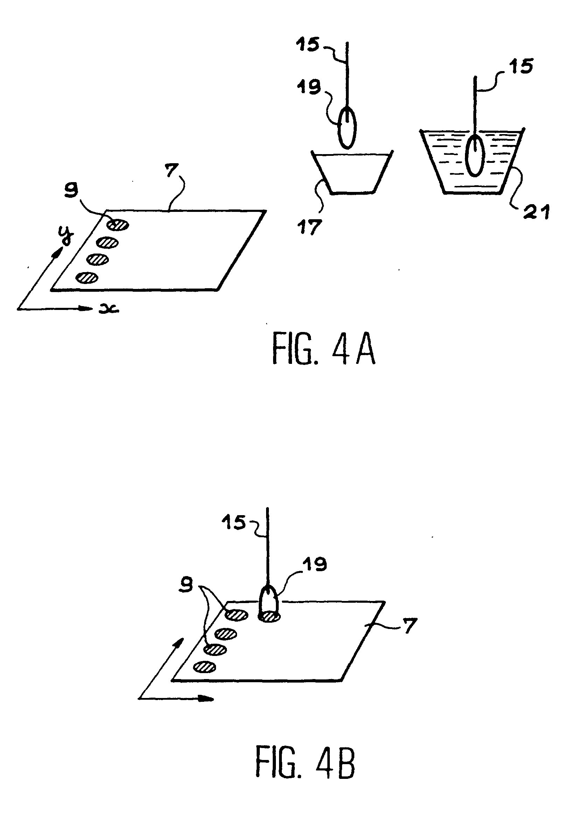

Sur les figures 4A et 4B, on a représenté un autre mode de réalisation de l'invention dans lequel l'élément capable de distribuer le ligand est constitué par une électrode en forme de fil 15.

Dans ce cas, on peut utiliser un support conducteur 7 comme représenté sur la figure 4A. Pour réaliser le dépôt du ligand, l'électrode 15 est tout d'abord plongée dans un récipient 17 contenant le ligand à fixer et elle retient ainsi une goutte 19 de ce ligand. On amène ensuite l'électrode comportant la goutte 19 de ligand au dessus du support conducteur 7, comme représenté sur la figure 4B en réalisant le contact électrique par l'intermédiaire de la goutte 19. En appliquant une impulsion électrique entre l'électrode 15 et le support conducteur 7, on assure la formation de dépôts 9 du ligand.

Après cette opération, on rince l'électrode 15 dans un bac de rinçage 21 pour qu'elle puisse servir à nouveau pour la réalisation d'un autre dépôt 9, soit avec le même ligand, soit avec un autre ligand.

Lorsqu'on utilise ce type d'électrode, la résolution des dépôts peut être moins bonne mais dans ce cas la facilité de rinçage de l'électrode 15 est un avantage déterminant.

Le procédé de l'invention est très intéressant car il permet d'une part d'utiliser un très petit volume de milieu réactionnel donc d'économiser les molécules d'intérêt biologique à coupler. Par ailleurs, on peut régler les dimensions des dépôts effectués sur le support alors que dans le cas des méthodes d'adressage mécanique impliquant des méthodes d'activation chimique classiques, la dimension des dépôts ne pouvait être inférieure à 50, voire 100 µm.

Selon l'invention, on peut très facilement réduire la dimension des dépôts, non pas en diminuant la taille de la goutte, ce qui est difficile à réaliser en pratique, mais en réduisant la surface de la zone électroactivable. En effet, la résolution des dépôts est optimisée par le fait que, seule, l'interface électrode/support située dans les lignes du champ électrique est activable ; c'est-à-dire que si une goutte déborde à l'extérieur de cette zone, son contenu ne sera pas fixé sur la surface conductrice.

Ainsi, si le diamètre de l'interface entre les embouts la et le support conducteur est de 200 µm, et qu'on utilise une zone conductrice ne mesurant que 10 µm de côté, seule cette zone conductrice pourra être recouverte de molécules d'intérêt biologique.

Selon l'invention, on peut réaliser sur un support des dépôts 9 en ligands différents. Ceci peut être obtenu en fixant successivement au moins deux ligands différents sur des sites différents du support à partir d'un seul élément en changeant le ligand distribué par cet élément. Dans ce cas, les dépôts peuvent être effectués successivement, soit en changeant le contenu du réservoir 1 des éléments représentés sur les figures 1 et 2, soit en utilisant l'électrode de la figure 4 que l'on plonge dans des réactifs différents. On peut aussi utiliser un réservoir fixe muni de moyens d'introduction et d'évacuation de ligand, c'est-à-dire comportant un système fluidique d'entrée et de sortie du ligand pour changer le contenu du réservoir sans déplacer celui-ci.

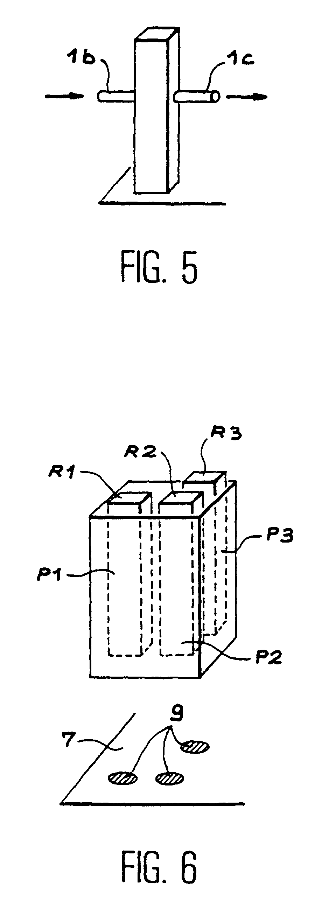

La figure 5 illustre un tel mode de réalisation du réservoir 1 muni d'une entrée 1b et d'une sortie 1c de liquide.

Bien entendu, on peut aussi utiliser pour réaliser des dépôts 9 de ligands identiques ou différents, plusieurs éléments tels que ceux représentés sur les figures 1 et 4. Ces éléments peuvent être éventuellement assemblés pour former une tête d'impression comme représenté sur la figure 6.

Sur cette figure 6, on voit que la tête d'impression comprend un premier réservoir R1 rempli d'un ligand P1, un second réservoir R2 rempli du ligand P2 et un troisième réservoir R3 rempli du ligand P3. Avec une tête multiple de ce type, on peut effectuer sur la surface conductrice 7, trois dépôts simultanés 9 réalisés respectivement en les ligands P1, P2 et P3.

On précise que les dépôts peuvent être réalisés sous atmosphère inerte ou dans un milieu liquide électrochimiquement neutre et, si possible, non miscible au milieu réactionnel contenu dans le réservoir.

Après la phase de dépôt, le support peut être rincé et utilisé de façon classique.

Les exemples suivants illustrent la réalisation de matrices d'oligonucléotides ou de peptides, à partir d'oligonucléotides ou de peptide portant un groupement pyrrole que l'on fixe sur un support conducteur en les copolymérisant par voie électrochimique avec du pyrrole, selon le procédé décrit dans le document [5] : WO-A-94/22889

### Exemple 1

### 1 - Fabrication de supports portant des oligonucléotides.

Les supports conducteurs utilisés sont des plaques de verre recouvertes d'une couche de chrome (pour l'adhésion) et d'une couche continue de 0,5 µm d'or. Cette couche est reliée à la sortie « électrode de travail » d'un potentiostat EGG 283.

Deux oligonucléotides différents portant un groupement pyrrole en 5' sont copolymérisés sur ces supports. Leurs séquences sont les suivantes :

Ils ont été synthétisés par la méthode décrite par Livache et al dans [5].

Pour la fixation de ces oligonucléotides sur le support, on utilise un milieu réactionnel comprenant 0,1M de LiClO4, 20 mM de pyrrole et 1 µM d'oligonucléotide portant un groupe pyrrole en 5'.

Cette solution est introduite dans un réservoir en polypropylène de forme conique qui contient une contre-électrode de platine (CE) connectée au potentiostat. Ce réservoir est facilement rempli par une micropipette d'un volume pouvant varier de 50 à 1000µl de milieu réactionnel. L'extrémité de ce cône a un diamètre d'environ 0,8 mm. Des cônes plus fins ou plus gros permettent d'utiliser d'autres volumes de réactif.

L'extrémité du cône est placée au contact de la surface conductrice et le copolymère est fabriqué par voltamétrie cyclique (de -0,35 à +0,85V/CE à la vitesse de 100mV/s). La charge enregistrée permet de déterminer l'épaisseur du polymère formé. Après la formation de ce premier dépôt, le cône est vidé, rincé puis rempli par un nouveau milieu réactionnel contenant un autre oligonucléotide. La plaque conductrice est déplacée (table x/y/z) et la même opération de copolymérisation est menée sur une autre plage de la surface conductrice permettant la fabrication d'un dépôt portant une autre séquence oligonucléotidique.

On prépare de cette façon deux matrices comportant uniquement des oligonucléotides pyrM5 et deux matrices comportant uniquement des oligonucléotides pyrCP.

On vérifie que les matrices d'oligonucléotides ainsi obtenues présentent les propriétés voulues pour détecter les oligonucléotides complémentaires par hybridation.

### 2 - Hybridation des oligonucléotides et détection.

Les oligonucléotides complémentaires testés sont les suivants :
- M5 complémentaires biotinylé : M5 _{comp}bio ;
- CP complémentaire biotinylé : CP_{comp}bio.

L'hybridation des oligonucléotides complémentaires se déroule dans un tampon PBS (Sigma) contenant 0,5 M de NaCl, 100 µg/ml d'ADN de sperme de saumon (Sigma), 10 mM d'EDTA et 10 nM d'oligonucléotide biotinylé complémentaire. L'hybridation est conduite à 45°C dans un volume de 20 µl durant 15 min. Un rinçage rapide au PBS/NaCl est alors réalisé. La détection des hybrides est alors réalisée après incubation dans une solution de PBS/NaCl contenant 0,1 mg/ml de R phycoérythrine (Molecular Probe). La fluorescence est détectée par une caméra refroidie (Hamamatsu) montée sur un microscope à épifluorescence. Les résultats sont exprimés en niveaux de gris.

On observe un spot de polypyrrole d'environ 0,8 mm de diamètre dont l'intensité de fluorescence est reportée ci-dessous :
- oligonucléotide sur support pyrM5 hybridé avec M5_{comp} bio : 110
- oligonucléotide sur support pyrM5 hybridé avec CP_{comp} bio : 5
- oligonucléotide sur support pyrCP hybridé avec M5_{comp} bio : 7
- oligonucléotide sur support pyrCP hybridé avec CP_{comp} bio : 84

On observe ainsi une bonne spécificité d'hybridation et un rapport signal/bruit élevé.

### Exemple 2

On suit le même mode opératoire que dans l'exemple 1, pour préparer des matrices d'oligonucléotides pyrM5 et pyrCP mais en utilisant comme support conducteur un support en matière plastique recouvert d'oxyde d'indium et d'étain (ITO).

Les résultats obtenus avec ces matrices pour la détection des oligonucléotides complémentaires biotinylés sont les suivants :
- oligonucléotide sur support pyrM5 hybridé avec M5_{comp} bio : 95
- oligonucléotide sur support pyrM5 hybridé avec CP_{comp} bio : 5
- oligonucléotide sur support pyrCP hybridé avec M5_{comp} bio : 7
- oligonucléotide sur support pyrCP hybridé avec CP_{comp} bio : 105

### Exemple 3

Dans cet exemple, on suit le même mode opératoire que dans l'exemple 1 pour préparer une matrice d'oligonucléotides pyrM5 sur un support en or supporté par du verre, mais on utilise, comme contre-électrode, un fil de platine chargé du milieu réactionnel au lieu du réservoir muni intérieurement d'une électrode de platine.

Comme représenté sur la figure 4A, le fil de platine 15 est chargé du milieu réactionnel par trempage dans un réservoir 17 contenant ce milieu. Le fil portant la goutte 19 est ensuite approché du support jusqu'au contact avec la goutte. L'impulsion électrochimique est alors réalisée. Le fil est relevé puis rincé dans l'eau. Les autres dépôts sont assurés de la même façon. On obtient ainsi des dépôts d'environ 1 mm de diamètre et une fluorescence intense est observable lorsqu'on utilise la matrice pour réaliser l'hybridation de l'oligonucléotide complémentaire. Les résultats obtenus sont les suivants :
- oligonucléotide sur support pyrM5 hybridé avec M5_{comp} bio : 400
- oligonucléotide sur support pyrM5 hybridé avec CP_{comp} bio : 10

### Exemple 4

De la même façon, des peptides peuvent être déposés. Des pyrroles-peptides sont synthétisés selon la procédure décrite par T. Livache et al, Biosensors and Bioelectronics 13, (1998) 629-634 [6]. Ils sont déposés selon la procédure habituelle (example 1). Les deux peptides ACTH (18-39) et ACTH (11-24) sont ensuite détectés par respectivement les anticorps biotinylés Mab (34-39) et Mab (18-24).

Les résultats de fluorescence après incubation avec la streptavidine phycoérythrine sont les suivants :

| | |
|---|---|
| Peptide ACTH 18-39 avec Mab 34-39 | 640 |
| Peptide ACTH 18-39 avec Mab 18-24 | 510 |
| Peptide ACTH 11-24 avec Mab 34-39 | 10 |
| Peptide ACTH 11-24 avec Mab 18-24 | 470 |

### Références citées

[1] : Fodor S. et al, Science, 1991, 251, pp. 767-773.
[2] : Khrapko K. R. et al, DNA Sequence -I.DNA Sequencing and Mapping, 1991, vol.1, pp. 375-388.
[3] : GB-A-2 319 838.
[4] : Livache T. et al, Nucleic Acids Res., 1994, 22, 15, pages 2915-2921.
[5] : WO-A-94/22889.
[6] : T. Livache et al, Biosensors and Bioelectronics 13, (1998), pages 629-634.
[7] : Emr, S. et Yacynych, A. Electroanalysis, 1995, 7, pp. 913-323.

## Revendications

1. Procédé de fabrication d'une matrice comprenant au moins un ligand fixé par voie électrochimique sur un support conducteur ou sur des zones conductrices d'un support, dans lequel on utilise au moins un élément capable de distribuer le(s) ligand(s) couplé(s) à un monomère électropolymérisable comme électrode pour réaliser une synthèse électriquement assistée d'un polymère porteur du (des) ligand(s) sur le support conducteur ou sur les zones conductrices du support.

2. Procédé selon la revendication 1, dans lequel ledit élément est constitué d'un réservoir contenant le ligand couplé au monomère électropolymérisable et comportant une partie conductrice.

3. Procédé selon la revendication 2, dans lequel le réservoir est muni de moyens d'introduction et d'évacuation de ligand.

4. Procédé selon la revendication 1, dans lequel ledit élément est constitué par une électrode en forme de fil ou d'aiguille, chargée extérieurement de ligand couplé au monomère électropolymérisable, le contact entre l'électrode et le support conducteur ou une zone conductrice du support étant assuré, lors de l'opération de fixation, par l'intermédiaire d'une goutte de ligand retenue par l'électrode.

5. Procédé selon l'une quelconque des revendications 1 à 4, dans lequel on fixe simultanément ou successivement des ligands identiques ou différents sur des sites conducteurs différents du support en utilisant plusieurs éléments distribuant respectivement des ligands identiques ou différents.

6. Procédé selon la revendication 5, dans lequel au moins deux des éléments sont réunis pour former une tête d'impression.

7. Procédé selon l'une quelconque des revendications 1 à 4, dans lequel on fixe successivement au moins deux ligands différents sur des sites différents du support en utilisant un seul élément et en changeant au moins une fois le ligand distribué par cet élément.

8. Procédé selon l'une quelconque de revendications 1 à 4, dans lequel les zones conductrices sont formées par des zones de matériau conducteur disposées sur un support isolant.

9. Procédé selon la revendication 8, dans lequel les zones de matériau conducteur sont interconnectées électriquement.

10. Procédé selon la revendication 8, dans lequel les zones de matériau conducteur sont adressables électriquement, individuellement ou par groupe, pour pouvoir être activées séparément.

11. Procédé selon l'une quelconque des revendications 8 à 10, dans lequel le matériau conducteur est choisi dans le groupe constitué de l'or, de l'argent, du platine, de l'oxyde d'indium et d'étain (ITO), du carbone et des polymères organiques conducteurs.

12. Procédé selon la revendication 1, dans lequel chaque élément distribue une solution du ligand comprenant le ligand couplé à un monomère électropolymérisable, le monomère électropolymérisable et éventuellement un agent dopant.

13. Procédé selon la revendication 1 ou 12, dans lequel le monomère électropolymérisable est le pyrrole.

14. Procédé selon la revendication 1 ou 13, dans lequel la fixation du ligand est obtenue par électrocopolymérisation du monomère et du ligand couplé au monomère.

15. Procédé selon l'une quelconque des revendications 1 à 14, dans lequel le ligand est un nucléotide, un oligonucléotide, un acide aminé ou un peptide.

## Patentansprüche

1. Verfahren zur Herstellung einer Matrix mit wenigstens einem elektrochemisch auf einem leitenden Träger oder auf leitfähigen Zonen eines Trägers fixierten Liganden, bei dem man wenigstens ein Element verwendet, das fähig ist, den (die) mit einem elektropolymerisierbaren Monomer als Elektrode gekoppelten Liganden zu verteilen, um eine elektrisch unterstützte Synthese eines Trägerpolymers des (der) Liganden auf dem leitenden Träger oder auf den leitfähigen Zonen des Trägers zu realisieren.

2. Verfahren nach Anspruch 1, bei dem das genannte Element durch einen Speicher gebildet wird, der den mit dem elektropolymerisierbaren Polymer gekoppelten und einen leitfähigen Teil umfassenden Liganden enthält.

3. Verfahren nach Anspruch 2, bei dem der Speicher mit Einrichtungen zum Einfüllen und Ausgeben des Liganden ausgestattet ist.

4. Verfahren nach Anspruch 1, bei dem das genannte Element durch eine draht- oder nadelförmige Elektrode gebildet wird, in die der mit dem elektropolymerisierbaren Monomer gekoppelte Ligand von außen eingespeist wird, wobei der Kontakt zwischen der Elektrode und dem leitenden Träger oder einer leitfähigen Zone des Trägers während der Fixierungsoperation durch einen von der Elektrode zurückgehaltenen Tropfen des Bindungspartners hergestellt wird.

5. Verfahren nach einem der Ansprüche 1 bis 4, bei dem man simultan oder sukzessive gleiche oder unterschiedliche Liganden auf verschiedenen leitfähigen Stellen des Trägers fixiert, indem man mehrere jeweils gleiche oder unterschiedliche Liganden verteilende Elemente benutzt.

6. Verfahren nach Anspruch 5, bei dem wenigstens zwei der Elemente vereinigt sind, um einen Druckkopf zu bilden.

7. Verfahren nach einem der Ansprüche 1 bis 4, bei dem man sukzessiv wenigstens zwei unterschiedliche Liganden auf verschiedenen Stellen des Trägers fixiert, indem man ein einziges Element benutzt und den durch dieses Element verteilten Liganden wenigstens einmal austauscht.

8. Verfahren nach einem der Ansprüche 1 bis 4, bei dem die leitfähigen Zonen durch Zonen aus leitfähigem Material gebildet werden, realisiert auf einem isolierenden Träger.

9. Verfahren nach Anspruch 8, bei dem die Zonen aus leitfähigem Material elektrisch miteinander verbunden sind.

10. Verfahren nach Anspruch 8, bei dem die Zonen aus leitfähigem Material elektrisch adressierbar sind, einzeln oder gruppenweise, um getrennt aktiviert werden zu können.

11. Verfahren nach einem der Ansprüche 8 bis 10, bei dem das leitfähige Material aus der Gruppe ausgewählt wird, die gebildet wird durch Gold, Silber, Platin, Indiumoxid und Zinn (ITO), Kohlenstoff und leitfähige organische Polymere.

12. Verfahren nach Anspruch 1, bei dem jedes Element eine Lösung des Liganden verteilt, die den mit dem elektropolymerisierbaren Monomer gekoppelten Liganden, das elektropolymerisierbare Monomer und eventuell einen Dotierstoff umfasst.

13. Verfahren nach Anspruch 1 oder 12, bei dem das elektropolymerisierbare Monomer Pyrrol ist.

14. Verfahren nach Anspruch 1 oder 13, bei dem man die Fixierung des Liganden durch Elektropolymerisation des Monomers und des mit dem Monomer gekoppelten Liganden realisiert.

15. Verfahren nach einem der Ansprüche 1 bis 14, bei dem der Ligand ein Nukleotid, ein Oligonukleotid, eine Aminosäure oder ein Peptid ist.

## Claims

1. Method for producing a matrix comprising at least one ligand fixed by electrochemical route to a conductive carrier or to conductive zones of a carrier, in which at least one element is used able to dispense the ligand(s) coupled to an electropolymerisable monomer as electrode to carry out electrically assisted synthesis of a polymer carrying the ligand(s) on the conductive carrier or on the conductive zones of the carrier.

2. Method according to claim 1, in which said element is made up of a reservoir containing the ligand coupled to electropolymerisable monomer and having a conductive part.

3. Method according to claim 2, in which the reservoir is provided with ligand insertion and evacuation means.

4. Method according to claim 1, in which said element is made up of an electrode in wire or needle form, charged externally with ligand coupled to the electropolymerisable monomer, the contact between the electrode and the conductive carrier or a conductive zone of the carrier being assured during the fixing operation by means of a drop of ligand withheld by the electrode.

5. Method according to any of claims 1 to 4, in which identical or different ligands are fixed simultaneously or successively on different conductive sites of the carrier by using several elements respectively dispensing identical or different ligands.

6. Method according to claim 5, in which at least two of the elements are grouped together to form a print head.

7. Method according to any of claims 1 to 4, in which at least two different ligands are successively fixed to different sites of the carrier using a single element and by changing at least once the ligand dispensed by this element.

8. Method according to any of claims 1 to 4, in which the conductive zones are formed of zones of conductive material arranged on an insulating carrier.

9. Method according to claim 8, in which the zones of conductive material are electrically interconnected.

10. Method according to claim 8, in which the zones of conductive material are electrically addressable either separately or in groups so that they can be activated separately.

11. Method according to any of claims 8 to 10, in which the conductive material is chosen from the group made up of gold, silver, platinum, indium and tin oxide (ITO), carbon and conductive organic polymers.

12. Method according to claim 1, in which each element dispenses a solution of ligand containing the ligand coupled to an electropolymerisable monomer, the electropolymerisable monomer and optionally a doping agent.

13. Method according to claim 1 or 12, in which the electropolymerisable monomer is pyrrole.

14. Method according to claim 1 or 13, in which fixing of the ligand is obtained by electrocopolymerisation of the monomer and of the ligand coupled to the monomer.

15. Method according to any of claims 1 to 14, in which the ligand is a nucleotide, an oligonucleotide, an amino acid or a peptide.
